(19) Europäisches Patentamt
European Patent Office
Office européen des brevets

(11) **EP 4 277 114 B1**

(12) **EUROPEAN PATENT SPECIFICATION**

(45) Date of publication and mention
of the grant of the patent:
**23.07.2025 Bulletin 2025/30**

(21) Application number: **23172457.6**

(22) Date of filing: **09.05.2023**

(51) International Patent Classification (IPC):
***H02P 21/02*** *(2006.01)*

(52) Cooperative Patent Classification (CPC):
**H02P 21/02;** H02P 2207/01

(54) **METHOD AND CONTROL DEVICE FOR CONTROLLING ASYNCHRONOUS INDUCTION MOTOR**

VERFAHREN UND STEUERVORRICHTUNG ZUR STEUERUNG EINES
ASYNCHRONINDUKTIONSMOTORS

PROCÉDÉ ET DISPOSITIF DE COMMANDE POUR COMMANDER UN MOTEUR ASYNCHRONE À
INDUCTION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **09.05.2022 CN 202210497318**

(43) Date of publication of application:
**15.11.2023 Bulletin 2023/46**

(73) Proprietor: **Carrier Corporation
Palm Beach Gardens, FL 33418 (US)**

(72) Inventors:
• **ZHANG, Zhenyu**
**Shanghai, 201206 (CN)**
• **CHEN, Kun**
**Shanghai, 201206 (CN)**
• **AGIRMAN, Ismail**
**Palm Beach Gardens, 33418 (US)**

(74) Representative: **Dehns
10 Old Bailey
London EC4M 7NG (GB)**

(56) References cited:
CN-A- 111 245 328     US-A1- 2012 217 908
US-A1- 2012 217 915

**Description**

**Technical field**

The present invention relates to motor control technology, in particular to a method for controlling an asynchronous induction motor, a control device for implementing the method, a motor system including the control device, and a computer-readable storage medium on which a computer program for implementing the method is stored.

**Background**

In most cases, an asynchronous induction motor operates in a non-full load area. At this time, if a variable frequency driver (VFD) still uses the rated magnetic flux to drive the motor, the motor efficiency will be reduced. Therefore, it is necessary to adjust the magnetic flux of the motor dynamically to improve the operation efficiency of the motor without reducing the torque performance.

US 2012/217915 A1 discloses both a system and method for calibrating a current sensing instant to latch a current value from a set of current signals. The control system includes a current adjustment module which after receiving commands from other sensor modules combines them to form one adjustment command for both the d-axis and q-axis current.

US 2012/217908 A1 discloses a method for controlling the system as described in US 2012/217915 A1 at or near stall conditions. Specifically, a data processor determines whether a composite torque command is larger than a pre-set torque threshold for a given time interval.

CN 111 245 328 A discloses a method that uses lookup tables combined with a regulator to control a permanent magnet synchronous motor.

**Summary**

According to a first aspect of the present application, there is provided a method for controlling an asynchronous induction motor, comprising:

a) determining a target value of d-axis current according to a target value of q-axis current of the asynchronous induction motor;
b) determining a correction value of the target value of the d-axis current based on q-axis voltage and d-axis voltage of the asynchronous induction motor; and
c) determining target values of the d-axis voltage and the q-axis voltage of the asynchronous induction motor based on the correction value of the target value of the d-axis current and the target value of the q-axis current. Step b comprises the following steps:

b1) determining a voltage amplitude value based on the q-axis voltage and the d-axis voltage of the asynchronous induction motor, wherein the q-axis voltage and the d-axis voltage are sampling values at the current time or target values determined at the previous time;
b2) if the determined voltage amplitude value is greater than a preset threshold, determining correction amount of the target value of the d-axis current based on a difference between the preset threshold and the voltage amplitude value; and
b3) if the determined voltage amplitude value is less than or equal to the preset threshold, the correction amount of the target value of the d-axis current is determined as 0. Additionally, the preset threshold is the maximum allowable value of the voltage amplitude.

Optionally, in the above method, it further comprises:
d) outputting the target values of the q-axis voltage and the d-axis voltage to a variable frequency driver used to drive the asynchronous induction motor.

Optionally, in the above method, the target value of the q-axis current may be determined as the minimum value of the q-axis current at a given torque.

Optionally, in the above method, in step a, the target value of the d-axis current may be determined to be equal to the target value of the q-axis current.

Optionally, in the above method, in step b2, PI controller or PID controller may be used to determine the correction amount of the target value of the d-axis current.

In addition to one or more of the above features, in the above method, step c may comprise each of the following steps:

c1) determining the target value of the q-axis voltage using PI controller or PID controller based on a difference between the target value and a sampling value of the q-axis current; and

c2) determining the target value of the d-axis voltage based on a difference between the correction value of the target value and a sampling value of the d-axis current.

According to a second aspect of the present application, there is provided a control device comprising:

memory;

processor coupled to the memory; and

a computer program stored on the memory and running on the processor, the running of the computer program causes the control device to execute the method described in the first aspect above.

According to a third aspect of the present application, there is provided a motor system comprising:

an asynchronous induction motor;

a variable frequency driver for driving the asynchronous induction motor; the control device having one or more features as described in the second aspect above.

According to a fourth aspect of the present application, there is provided a computer-readable storage medium on which a computer program suitable for execution on a processor of a terminal device is stored, and the execution of the computer program causes the steps of the method described above to be executed.

## Description of the drawings

The above and/or other aspects and advantages of the present invention will be more clearly and easily understood from the following description of various aspects by way of example only in conjunction with the accompanying drawings, in which the same or similar elements are designated by the same reference numerals. The accompanying drawings include:

FIG. 1 is a schematic diagram of d-axis and q-axis voltage control logic of an asynchronous induction motor based on the above total current minimization principle.
FIG. 2 is a schematic diagram of d-axis and q-axis voltage control logic of an asynchronous induction motor.
FIG. 3 is a flowchart of a method for controlling an asynchronous induction motor.
FIG. 4 is a flowchart of a method for determining a correction value of a d-axis current target value.
FIG. 5 is a flowchart of a method for determining target values of q-axis voltage and d-axis voltage.
FIG. 6 is a schematic block diagram of a typical motor controller or control device.
FIG. 7 is a schematic block diagram of a typical motor system.

## Detailed description

The present invention is described more fully below with reference to the accompanying drawings, in which illustrative embodiments of the invention are illustrated. However, the present invention may be implemented in different forms and should not be construed as limited to the embodiments presented herein. The presented embodiments are intended to make the disclosure herein comprehensive and complete, so as to more comprehensively convey the protection scope of the application to those skilled in the art.

In this specification, terms such as "comprising" and "including" mean that in addition to units and steps that are directly and clearly stated in the specification and claims, the technical solution of this application does not exclude the presence of other units and steps that are not directly and clearly stated in the specification and claims. Unless otherwise specified, terms such as "first" and "second" do not indicate the order of the units in terms of time, space, size, etc., but are merely used to distinguish the units.

Generally speaking, in the d-axis and q-axis steady-state equivalent circuit of an asynchronous induction motor, the influence of magnetic core loss can be expressed in the form of equivalent resistance. After research, the inventor of the application found that the total current flowing through the magnetic core can be minimized by keeping d-axis current $i_{ds}$ and q-axis current $i_{qs}$ of the motor consistent, so as to improve the operation efficiency of the motor.

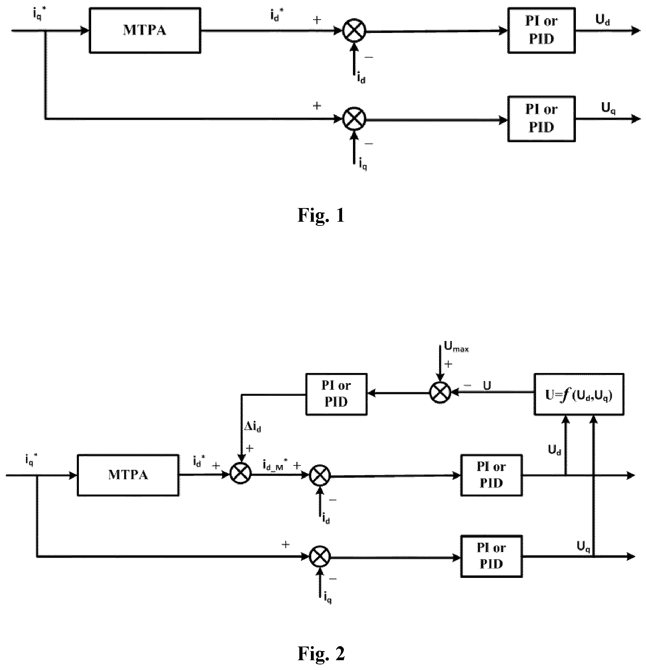

FIG. 1 is a schematic diagram of d-axis and q-axis voltage control logic of an asynchronous induction motor based on the above total current minimization principle. As shown in FIG. 1, based on the Maximum Torque Per Ampere (MTPA) control algorithm, a target value $i_d^*$ of d-axis current is set equal to a target value $i_q^*$ of q-axis current. For example, the target value $i_q^*$ of q-axis current can be determined as the minimum value of q-axis current at a given torque.

Then, a difference between the target value $i_d^*$ and a sampling value $i_d$ of d-axis current is input to PI controller or PID controller to obtain an adjustment value or target value $U_d$ of the d-axis voltage, so that a variable frequency driver (VFD) can generate the corresponding driving voltage based on the target value. On the other hand, a difference between the target value $i_q^*$ and a sampling value $i_q$ of q-axis current is input to PI controller or PID controller to obtain an adjustment value or target value $U_q$ of the q-axis voltage, so that the variable frequency driver can generate the corresponding driving voltage based on the adjustment value.

Through research, the inventor of the application also found that when the motor operates in the high load area, the stator voltage increases with the increase of d-axis current $i_{ds}$ until the d-axis current $i_{ds}$ reaches a certain level. This means that after the d-axis current $i_{ds}$ reaches this level, even if it increases again, the stator voltage will not increase, resulting in the reduction of motor operation efficiency.

FIG. 2 is a schematic diagram of d-axis and q-axis voltage control logic of an asynchronous induction motor according to one or more embodiments of the present application, which avoids the above efficiency reduction by introducing a feedback control loop related to the motor voltage amplitude.

Referring to FIG. 2, for the control of q-axis voltage, similar to FIG. 1, a difference between the target value $i_q^*$ and a sampling value $i_q$ of q-axis current is input to PI controller or PID controller to obtain an adjustment value or target value $U_q$ of the q-axis voltage, so that the variable frequency driver can generate the corresponding driving voltage based on the target value.

For the control of d-axis voltage, as shown in FIG. 2, based on the Maximum Torque Per Ampere (MTPA) control algorithm, a target value $i_d^*$ of d-axis current is set equal to a target value $i_q^*$ of q-axis current, and similarly, the target value $i_q^*$ of q-axis current can be determined as the minimum value of q-axis current at a given torque.

The difference from the control logic shown in FIG. 1 is that in the embodiment shown in FIG. 2, the target value $i_d^*$ of d-axis current is corrected and then compared with the sampling value $i_d$ to obtain a difference input to PI controller or PID controller. The PI controller or PID controller then generates an adjustment value or target value $U_d$ of the d-axis voltage based on the difference, so that the variable frequency driver (VFD) can generate the corresponding driving voltage based on the adjustment value. Referring to FIG. 2, a correction value $i_{d\_M}^*$ of the target value of the d-axis current can be determined by using the determined target values of the q-axis voltage and the d-axis voltage as feedback signals. Specifically, first determine the voltage amplitude U of the asynchronous induction motor. Exemplarily, the voltage amplitude can be obtained, for example, by the following equation (1a):

$$U = \sqrt{(U_{j-1}^{d\_T})^2 + (U_{j-1}^{q\_T})^2} \quad \textbf{(1a)}$$

Here, U is the voltage amplitude, $U_{j-1}^{d\_T}$ and $U_{j-1}^{q\_T}$ are the target values of d-axis voltage and q-axis voltage at the previous time (e.g. the j-1 time).

It should be noted that the voltage amplitude U of the asynchronous induction motor can also be determined based on the sampling values of d-axis voltage and q-axis voltage at the current time. Exemplarily, the voltage amplitude can be obtained, for example, by the following equation (1b):

$$U = \sqrt{(U_j^{d\_s})^2 + (U_j^{q\_s})^2} \quad \textbf{(1b)}$$

Here, U is the voltage amplitude, $U_j^{d\_s}$ and $U_j^{q\_s}$ are the sampling values of d-axis voltage and q-axis voltage at the current time (e.g. the j-th time).

Then, the voltage amplitude U is compared with the preset threshold, and the output of PI controller or PID controller or the correction amount $\Delta i_d$ of the target value of d-axis current is determined according to the comparison results. The above threshold may be, for example, the maximum allowable value $U_{max}$ of the voltage amplitude. When the voltage amplitude is greater than the preset threshold, exemplarily, the correction amount $\Delta i_d$ can be determined based on the PI control algorithm shown in the following equation:

$$\Delta i_d = (U_{max} - U)(k_p + k_i/S) \qquad (2)$$

Here, $K_p$ is the proportional adjustment coefficient, $K_i$ is the integral adjustment coefficient, and S represents the integral.

On the other hand, when the voltage amplitude is less than or equal to the preset threshold, exemplarily, the correction amount $\Delta i_d$ can be determined to be 0.

Thus, the correction value $i_{d\_M}^*$ of the target value of the d-axis current can be determined as:

$$i_{d\_M}^* = i_d^* + \Delta i_d \qquad (3)$$

In the above embodiment, through feedback mechanism based on the voltage amplitude, the flux current can be controlled adaptively, and the motor efficiency can be improved without sacrificing torque performance. In addition, because the control logic does not involve the parameters of the motor, it has strong robustness.

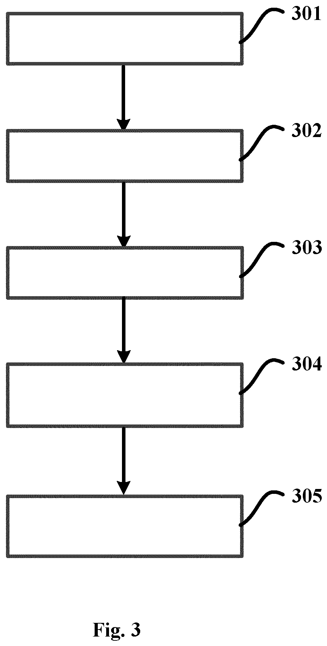

FIG. 3 is a flowchart of a method for controlling an asynchronous induction motor according to some embodiments of the present application. The method described below can be implemented by various devices, such as but not limited to a motor controller and a control unit integrated in the variable frequency driver.

Referring to FIG. 3, in step 301, the motor controller or control unit determines the target value $i_q^*$ of the q-axis current according to the target torque of the asynchronous induction motor. Exemplarily, the target value $i_q^*$ may be determined as the minimum value of the q-axis current at a given torque.

Then proceed to step 302. In this step, the motor controller or control unit determines the target value $i_d^*$ of the d-axis current according to the target value $i_q^*$ of the q-axis current of the asynchronous induction motor. Exemplarily, based on the Maximum Torque Per Ampere (MTPA) control algorithm, the target value $i_d^*$ of d-axis current is set equal to the target value $i_q^*$ of q-axis current.

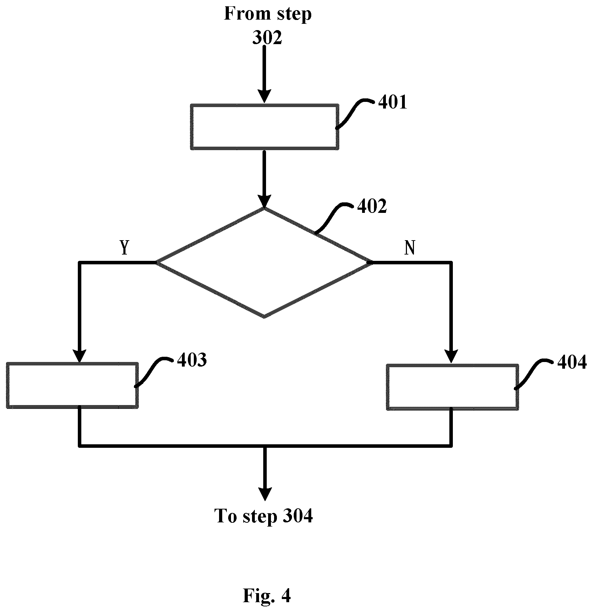

The flow shown in FIG. 3 then proceeds to step 303. In this step, the motor controller or control unit corrects the target value $i_d^*$ of d-axis current. Exemplarily, the motor controller or control unit may obtain a correction value $i_{d\_M}^*$ of the target value $i_d^*$ by performing the method steps shown in FIG. 4. Specifically, the method shown in FIG. 4 includes the following steps:

Step 401: determine the current voltage amplitude U of the asynchronous induction motor based on the d-axis voltage and q-axis voltage of the asynchronous induction motor. As described above, the d-axis voltage and q-axis voltage can be the sampling values at the current time or the target values determined at the previous time. Exemplarily, the voltage amplitude can be calculated using the above equation (1a) or (1b), for example.

Step 402: judge whether the determined voltage amplitude is greater than the preset threshold (for example, the maximum allowable value Umax of the voltage amplitude). If the voltage amplitude is greater than the preset threshold, proceed to step 403, otherwise proceed to step 404.

Step 403: determine the correction value of the target value of the d-axis current based on the difference between the threshold and the voltage amplitude. For example, the correction value $i_{d\_M}^*$ may be determined based on the following equation:

$$i_{d\_M}^* = i_d^* + (U_{max} - U)(k_p + k_i/S) \qquad (4)$$

Step 404: determine the correction amount $i_{d\_M}^*$ of the target value of the d-axis current as 0.

After performing step 303 or completing the process shown in FIG. 4, the process shown in FIG. 3 will go to step 304. In this step, the motor controller or control unit determines the target values of q-axis voltage and d-axis voltage of the asynchronous induction motor based on the determined correction amount $i^*_{d\_M}$ of the target value of the d-axis current and the target value $i^*_q$ of the q-axis current.

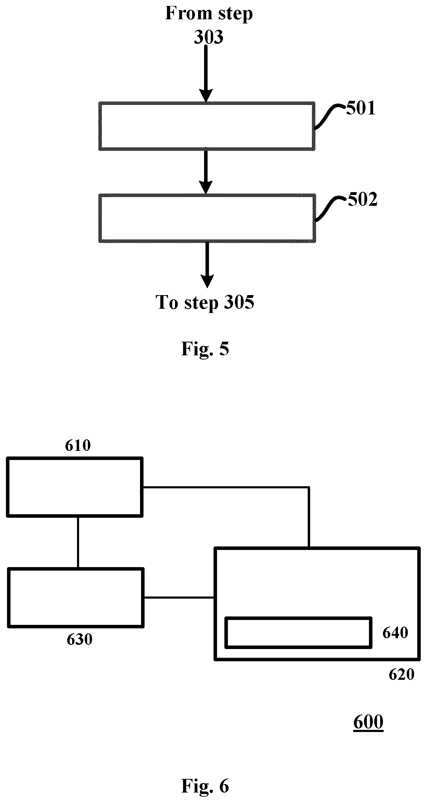

Exemplarily, the motor controller or control unit may determine the target values of the q-axis voltage and the d-axis voltage by performing the method steps shown in FIG. 5. Specifically, the method shown in FIG. 5 includes the following steps:

Step 501: input a difference between the target value $i^*_q$ and a sampling value $i_q$ of q-axis current to PI controller or PID controller to obtain an adjustment value or target value $U_q$ of the q-axis voltage.

Step 502: input a difference between the correction amount $i^*_{d\_M}$ of the target value and a sampling value $i_d$ of d-axis current to PI controller or PID controller to obtain an adjustment value or target value $U_d$ of the d-axis voltage.

It should be noted that steps 501 and 502 shown in FIG. 5 can be performed in parallel or in the opposite order to that shown in FIG. 5 (for example, step 502 first and then step 501).

After performing step 304 or completing the process shown in FIG. 5, the process shown in FIG. 3 will go to step 305. In this step, the motor controller or control device outputs the target values $U_q$ and $U_d$ of q-axis voltage and d-axis voltage to the variable frequency driver used to drive the asynchronous induction motor.

FIG. 6 is a schematic block diagram of a typical motor controller or control device. The motor controller or control device shown in FIG. 6 can be used to implement the method shown in FIGS. 3-5.

As shown in FIG. 6, the motor controller or control device 600 includes a communication unit 610, a memory 620 (for example, non-volatile memory such as flash memory, ROM, hard disk drive, magnetic disk, optical disc), a processor 630, and a computer program 640.

The communication unit 610, as a communication interface, is configured to establish a communication connection between the motor controller or control device and an external device (for example, a variable frequency driver) or a network (for example, the Internet of things).

The memory 620 stores a computer program 640 executable by the processor 630. In addition, the memory 620 may also store data generated when the processor 630 executes the computer program and data received from the external device via the communication unit 610.

The processor 630 is configured to run the computer program 640 stored on the memory 620 and access data on the memory 620 (for example, calling data received from the external devices and storing calculation results such as d-axis and q-axis voltage target values in the memory 620).

The computer program 640 may include computer instructions for implementing the method described by means of FIGS. 3-5 so that the corresponding method can be implemented when the computer program 640 is run on the processor 630.

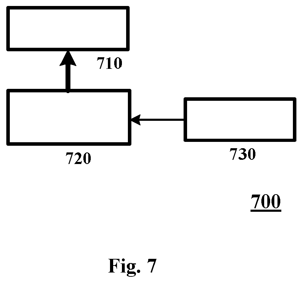

FIG. 7 is a schematic block diagram of a typical motor system.

The motor system 700 shown in FIG. 7 includes an asynchronous induction motor 710, a variable frequency driver 720 for driving the asynchronous induction motor, and a control device 730. The control device 730 may have various features of the device shown in FIG. 6, which may be configured to implement the method shown in FIGS. 3-5.

For the existing control device (such as motor controller), the above voltage control logic can be implemented only by upgrading the control software running therein, which is beneficial to reduce the cost and shorten the system development time.

According to another aspect of the present application, there is also provided a computer-readable storage medium on which a computer program is stored. When the program is executed by the processor, one or more steps contained in the method described above with the help of FIGS. 3-5 can be realized.

The computer-readable storage medium referred to in the application includes various types of computer storage media, and may be any available medium that can be accessed by a general-purpose or special-purpose computer. For example, the computer-readable storage medium may include RAM, ROM, EPROM, E2PROM, registers, hard disks, removable disks, CD-ROM or other optical disk storage, magnetic disk storage or other magnetic storage devices, or any other transitory or non-transitory medium that can be used to carry or store a desired program code unit in the form of instructions or data structures and that can be accessed by a general-purpose or special-purpose computer or a general-purpose or special-purpose processor. The above combination should also be included in the protection scope of the computer-readable storage medium. An exemplary storage medium is coupled to the processor such that the processor can read and write information from and to the storage medium. In the alternative, the storage medium may be integrated into the processor. The processor and the storage medium may reside in the ASIC. The ASIC may reside in the user terminal. In the alternative, the processor and the storage medium may reside as discrete components in the user terminal.

Those skilled in the art will appreciate that the various illustrative logical blocks, modules, circuits, and algorithm steps described herein can be implemented as electronic hardware, computer software, or combinations of both.

To demonstrate this interchangeability of hardware and software, various illustrative components, blocks, modules, circuits, and steps have been described above generally in terms of their functionality. Whether such functionality is implemented in hardware or software depends on the particular application and design constraints imposed on the overall system. Those skilled in the art may implement the described functionality in varying ways for the particular application. However, such implementation decisions should not be interpreted as causing a departure from the scope of the present invention.

**Claims**

1. A method for controlling an asynchronous induction motor, comprising:

   a) determining (302) a target value of d-axis current according to a target value of q-axis current of the asynchronous induction motor;
   b) determining (303) a correction value of the target value of the d-axis current based on q-axis voltage and d-axis voltage of the asynchronous induction motor; and
   c) determining (304) target values of the d-axis voltage and the q-axis voltage of the asynchronous induction motor based on the correction value of the target value of the d-axis current and the target value of the q-axis current, **characterized in that** step b) comprises:

   b1) determining (401) a voltage amplitude value based on the q-axis voltage and the d-axis voltage of the asynchronous induction motor, wherein the q-axis voltage and the d-axis voltage are sampling values at the current time or target values determined at the previous time;
   b2) if the determined voltage amplitude value is greater than a preset threshold, determining (403) correction amount of the target value of the d-axis current based on a difference between the preset threshold and the voltage amplitude value; and
   b3). if the determined voltage amplitude value is less than or equal to the preset threshold, the correction (404) amount of the target value of the d-axis current is determined as 0; and

   wherein the preset threshold is the maximum allowable value of the voltage amplitude.

2. The method according to claim 1, wherein the method further comprises:
   d) outputting (305) the target values of the q-axis voltage and the d-axis voltage to a variable frequency driver used to drive the asynchronous induction motor.

3. The method according to claim 1 or 2, wherein the target value of the q-axis current is determined as the minimum value of the q-axis current at a given torque.

4. The method according to any preceding claim, wherein in step a, the target value of the d-axis current is determined to be equal to the target value of the q-axis current

5. The method according to any preceding claim, wherein in step b2, PI controller or PID controller is used to determine the correction amount of the target value of the d-axis current

6. The method according to any preceding claim, wherein step c comprises:

   c1) determining (501) the target value of the q-axis voltage using PI controller or PID controller based on a difference between the target value and a sampling value of the q-axis current; and
   c2) determining (502) the target value of the d-axis voltage based on a difference between the correction value of the target value and a sampling value of the d-axis current.

7. A control device (610) comprising:

   memory (620);

processor (630) coupled to the memory (620); and
a computer program (640) stored on the memory and running on the processor, the running of the computer program causes the control device (610) to execute the method according to any preceding claim.

8. A motor system comprising:

an asynchronous induction motor (710);
a variable frequency driver (720) for driving the asynchronous induction motor;
the control device (610) according to claim 7.

9. A computer-readable storage medium having instructions stored in the computer-readable storage medium, when the instructions are executed by a processor, the processor is caused to execute the method of any one of claims 1 to 6.

**Patentansprüche**

1. Verfahren zur Steuerung eines Asynchroninduktionsmotors, umfassend:

a) Bestimmen (302) eines Zielwerts eines d-Achsenstroms entsprechend einem Zielwert eines q-Achsenstroms des Asynchroninduktionsmotors;
b) Bestimmen (303) eines Korrekturwerts des Zielwerts des d-Achsenstroms basierend auf der q-Achsenspannung und der d-Achsenspannung des Asynchroninduktionsmotors; und
c) Bestimmen (304) eines Zielwerts der d-Achsenspannung und der q-Achsenspannung des Asynchroninduktionsmotors basierend auf dem Korrekturwert des Zielwerts des d-Achsenstroms und des Zielwerts des q-Achsenstroms, **dadurch gekennzeichnet, dass** Schritt b) Folgendes umfasst:

b1) Bestimmen (401) eines Spannungsamplitudenwerts basierend auf der q-Achsenspannung und der d-Achsenspannung des Asynchroninduktionsmotors, wobei die q-Achsenspannung und die d-Achsenspannung Abtastwerte zum aktuellen Zeitpunkt oder zu dem vorherigen Zeitpunkt bestimmte Zielwerte sind;
b2) Bestimmen (403) eines Korrekturbetrags des Zielwerts des d-Achsenstroms basierend auf einer Differenz zwischen einem voreingestellten Schwellenwert und dem Spannungsamplitudenwert, wenn der bestimmte Spannungsamplitudenwert größer als der voreingestellte Schwellenwert ist; und
b3) Bestimmen des Korrekturbetrags (404) des Zielwerts des d-Achsenstroms als 0, wenn der bestimmte Spannungsamplitudenwert kleiner als der oder gleich dem voreingestellten Schwellenwert ist; und

wobei der voreingestellte Schwellenwert der maximal zulässige Wert der Spannungsamplitude ist.

2. Verfahren nach Anspruch 1, wobei das Verfahren ferner Folgendes umfasst:
d) Ausgeben (305) des Zielwerts der q-Achsenspannung und der d-Achsenspannung an einen zum Antreiben des Asynchroninduktionsmotors verwendeten Treiber mit variabler Frequenz.

3. Verfahren nach Anspruch 1 oder 2, wobei der Zielwert des q-Achsenstroms als der Mindestwert des q-Achsenstroms bei einem gegebenen Drehmoment bestimmt wird.

4. Verfahren nach einem der vorhergehenden Ansprüche, wobei der Zielwert des d-Achsenstroms in Schritt a als gleich dem Zielwert des q-Achsenstroms bestimmt wird.

5. Verfahren nach einem der vorhergehenden Ansprüche, wobei eine PI-Steuerung oder PID-Steuerung in Schritt b2 zum Bestimmen des Korrekturbetrags des Zielwerts des d-Achsenstroms verwendet wird.

6. Verfahren nach einem der vorhergehenden Ansprüche, wobei Schritt c Folgendes umfasst:

c1) Bestimmen (501) des Zielwerts der q-Achsenspannung unter Verwendung einer PI-Steuerung oder PID-Steuerung basierend auf einer Differenz zwischen dem Zielwert und einem Abtastwert des q-Achsenstroms; und
c2) Bestimmen (502) des Zielwerts der d-Achsenspannung basierend auf einer Differenz zwischen dem Korrekturwert des Zielwerts und einem Abtastwert des d-Achsenstroms.

7. Steuervorrichtung (610), umfassend:

Speicher (620);
einen mit dem Speicher (620) gekoppelten Prozessor (630); und
ein Computerprogramm (640), das in dem Speicher gespeichert ist und auf dem Prozessor abläuft, wobei das Ablaufen des Computerprogramms die Steuervorrichtung (610) zum Ausführen des Verfahrens nach einem der vorhergehenden Ansprüche veranlasst.

8. Motorsystem, umfassend:

einen Asynchroninduktionsmotor (710);
einen Treiber (720) mit variabler Frequenz zum Antreiben des Asynchroninduktionsmotors;
die Steuervorrichtung (610) nach Anspruch 7.

9. Computerlesbares Speichermedium, das in dem computerlesbaren Speichermedium gespeicherte Anweisungen aufweist, wobei ein Prozessor zum Ausführen des Verfahrens nach einem der Ansprüche 1 bis 6 veranlasst wird, wenn die Anweisungen durch den Prozessor ausgeführt werden.

## Revendications

1. Procédé de commande d'un moteur asynchrone à induction, comprenant :

a) la détermination (302) d'une valeur cible d'un courant d'axe d selon une valeur cible d'un courant d'axe q du moteur asynchrone à induction ;
b) la détermination (303) d'une valeur de correction de la valeur cible du courant d'axe d sur la base de la tension d'axe q et de la tension d'axe d du moteur asynchrone à induction ; et
c) la détermination (304) de valeurs cibles de la tension d'axe d et de la tension d'axe q du moteur asynchrone à induction sur la base de la valeur de correction de la valeur cible du courant d'axe d et de la valeur cible du courant d'axe q, **caractérisé en ce que** l'étape b) comprend :

b1) la détermination (401) d'une valeur d'amplitude de tension sur la base de la tension d'axe q et de la tension d'axe d du moteur asynchrone à induction, dans lequel la tension d'axe q et la tension d'axe d sont des valeurs d'échantillonnage à l'instant actuel ou des valeurs cibles déterminées à l'instant précédent ;
b2) si la valeur d'amplitude de tension déterminée est supérieure à un seuil prédéfini, la détermination (403) de la quantité de correction de la valeur cible du courant d'axe d sur la base d'une différence entre le seuil prédéfini et la valeur d'amplitude de tension ; et
b3). si la valeur d'amplitude de tension déterminée est inférieure ou égale au seuil prédéfini, la quantité de correction (404) de la valeur cible du courant d'axe d est déterminée comme étant égale à 0 ; et

dans lequel le seuil prédéfini est la valeur maximale autorisée de l'amplitude de tension.

2. Procédé selon la revendication 1, dans lequel le procédé comprend également :
d) la transmission (305) des valeurs cibles de la tension d'axe q et de la tension d'axe d à un variateur de fréquence utilisé pour entraîner le moteur asynchrone à induction.

3. Procédé selon la revendication 1 ou 2, dans lequel la valeur cible du courant d'axe q est déterminée comme étant la valeur minimale du courant d'axe q à un couple donné.

4. Procédé selon une quelconque revendication précédente, dans lequel, à l'étape a, la valeur cible du courant d'axe d est déterminée comme étant égale à la valeur cible du courant d'axe q.

5. Procédé selon une quelconque revendication précédente, dans lequel, à l'étape b2, un dispositif de commande PI ou un dispositif de commande PID est utilisé pour déterminer la quantité de correction de la valeur cible du courant d'axe d.

6. Procédé selon une quelconque revendication précédente, dans lequel l'étape c comprend :

c1) la détermination (501) de la valeur cible de la tension d'axe q à l'aide d'un dispositif de commande PI ou d'un dispositif de commande PID sur la base d'une différence entre la valeur cible et une valeur d'échantillonnage du courant d'axe q ; et

c2) la détermination (502) de la valeur cible de la tension d'axe d sur la base d'une différence entre la valeur de correction de la valeur cible et une valeur d'échantillonnage du courant d'axe d.

7. Dispositif de commande (610) comprenant :

une mémoire (620) ;

un processeur (630) couplé à la mémoire (620) ; et

un programme informatique (640) stocké sur la mémoire et exécuté sur le processeur, l'exécution du programme informatique amène le dispositif de commande (610) à exécuter le procédé selon une quelconque revendication précédente.

8. Système de moteur comprenant :

un moteur asynchrone à induction (710) ;

un variateur de fréquence (720) destiné à entraîner le moteur asynchrone à induction ;

le dispositif de commande (610) selon la revendication 7.

9. Support de stockage lisible par ordinateur présentant des instructions stockées dans le support de stockage lisible par ordinateur, qui, lorsque les instructions sont exécutées par un processeur, le processeur est amené à exécuter le procédé selon l'une quelconque des revendications 1 à 6.

**Fig. 1**

**Fig. 2**

**Fig. 3**

**From step
302**

401

402

Y

N

403

404

**To step 304**

**Fig. 4**

From step
303

501

502

To step 305

Fig. 5

610

630

640

620

600

Fig. 6

**Fig. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2012217915 A1
- US 2012217908 A1
- CN 111245328 A